# EUROPÄISCHE PATENTSCHRIFT

(11) **EP 2 917 972 B1**
(45) Veröffentlichungstag und Bekanntmachung des Hinweises auf die Patenterteilung: **21.03.2018**
(21) Anmeldenummer: 13786238.9
(22) Anmeldetag: 04.11.2013
(51) Int. Cl.: H01R 4/64, H01R 4/26, H02G 15/068

(54) **ERDUNGSVORRICHTUNG FÜR DEN ELEKTRISCH LEITFÄHIGEN MANTEL EINES KABELS UND VERFAHREN ZUM ANBRINGEN DER ERDUNGSVORRICHTUNG**
EARTHING DEVICE FOR THE ELECTRICALLY CONDUCTIVE JACKET OF A CABLE AND METHOD FOR APPLYING THE EARTHING DEVICE
DISPOSITIF DE MISE À LA TERRE D'UNE GAINE DE CÂBLE ÉLECTRIQUEMENT CONDUCTRICE ET PROCÉDÉ DE MONTAGE DU DISPOSITIF DE MISE À LA TERRE

(30) Priorität: 06.11.2012 DE 102012220197
(43) Veröffentlichungstag der Anmeldung: 16.09.2015
(73) Patentinhaber: Tyco Electronics Raychem GmbH, 85521 Ottobrunn (DE)
(72) Erfinder: HELLIGE, Denny, 85579 Neubiberg (DE); BEHNEKE, Klaus-Peter, 21266 Jesteburg (DE)
(74) Vertreter: Grünecker Patent- und Rechtsanwälte PartG mbB
(86) Internationale Anmeldenummer: PCT/EP2013/072958
(87) Internationale Veröffentlichungsnummer: WO 2014/072258

(56) Entgegenhaltungen:
- EP-A1- 0 118 627
- WO-A1-2011/069547
- WO-A2-99/29012
- DE-A1- 1 665 548
- DE-A1- 2 204 163
- US-A- 4 080 024
- US-A- 5 616 036
- US-A- 5 850 056

## Beschreibung

Die vorliegende Erfindung bezieht sich auf eine Erdungsvorrichtung für einen elektrisch leitfähigen Mantel eines Kabels, insbesondere für Aluminium- oder Bleimäntel, wie sie bei Niederspannungskabeln und Mittelspannungskabeln, bei letzteren insbesondere für den Potentialausgleich, Verwendung finden. Beispielsweise sind derartige Erdungsvorrichtungen bei der Verbindung von Vierleiter- oder Dreileitermassekabeln mit Vierleiter-Kunststoffkabeln von Bedeutung und speziell bei der Ausgestaltung entsprechender Übergangsmuffen für eine solche Verbindung.

Aber auch für Endabschlüsse von aluminium- oder bleiummantelten Kabeln ist die vorliegende Erfindung einsetzbar.

Aus der DE 27 45 832 A1 ist ein Verbindungsstück zum Anschließen eines Erdleiters an den metallischen Mantel eines elektrischen Leiters bekannt, das eine C-förmige Hülse aus einem biegsamen leitenden Material mit einem ersten Bogenstück und einem zweiten Bogenstück aufweist. Die C-förmige Hülse wird zur Montage verformt und komplett um den Kabelumfang gebogen und eine ausgestanzte Zunge teilt einen Innenraum dieses Verbindungsstücks in eine den Leiter und eine den Erdleiter aufnehmende Kammer auf.

Die DE 44 07 467 C2 bezieht sich auf eine Vorrichtung zur Befestigung eines abgeschirmten Kabels, beispielsweise an einer Erdungsschiene. Dabei wird auf die freigelegte Abschirmung des Kabels eine Quetschhülse aufgecrimpt, die eine hülseneinwärts gerichtete nicht isolierte Zunge zum Einlegen eines Anschlussteils zwischen Zunge und Mantel der Quetschhülse aufweist. Das Anschlussteil ist nach dem Einlegen an der Quetschhülse durch das Aufcrimpen festklemmbar.

Die schweizerische Patentschrift CH 674 599 A5 zeigt eine Kabeleinführung mit in der Durchführung radial wirksamen Federteilen. Die Federteile stellen eine galvanische elektrisch leitende Verbindung zwischen der Kabelabschirmung eines Kabels und dem Gehäuse der Kabeldurchführung her. Dieses Federteil kann aus einem im Wesentlichen V-förmig gebogenen Blech bestehen, das in eine im Inneren der Durchführung angebrachte Ringnut eingesetzt ist. Das heißt, das Federteil ist zwischen dem Kabel und der Durchführung aufgenommen.

Die WO 2011/069547 A1 bezieht sich auf einen Vorspannungsverbinder zum Kontaktieren der Abschirmung eines Kabels an einer Kabelverbindung. Dabei erstreckt sich eine äußere Hülle über einen Bereich einer Kabelhülle. Der Vorspannungsverbinder umfasst einen Endbereich zum Kontaktieren der Abschirmung und ein leitfähiges Band, das ein erstes Ende hat, das mit dem Endbereich verbunden ist und ein zweites Ende, dass mit einem Anschluss verbunden werden kann, der die Vorspannung bereitstellt. Mindestens ein Teilbereich des leitfähigen Bandes umfasst mindestens eine Schicht eines festen flachen Elements, dass eine Breite, die im wesentlichen gleich der Breite des leitfähigen Bandes ist, wobei dieser Teilbereich wenigstens teilweise von der äußeren Hülle bedeckt ist.

Die DE 2 204 163 A1 betrifft eine Erdungsvorrichtung zur Verwendung bei einem abgeschirmten Hochspannungskabel, das einen Innenleiter, eine diesen umgebende Isolierung, eine diese umgebende und ein metallisches Abschirmglied aufweisende Abschirmung und einen die letztere umgebenden Außenmantel hat. Weiterhin ist eine elektrische Kontaktvorrichtung vorgesehen, die einen aus leitendem Material bestehenden Kontaktstreifen hat, der sich mindestens über einen Teil des Außenumfangs der metallischen Abschirmung erstreckt, wobei ein Teil des Außenmantels zum Freilegen der Abschirmung entfernt ist. Die Kontaktvorrichtung weist Federmittel auf, mit deren Hilfe mindestens ein Teil des Kontaktstreifens radial relativ zum Außenumfang der Abschirmung federnd verformbar oder verbiegbar ist. Weiterhin ist eine Druckvorrichtung vorgesehen, die eine einstellbare Kraft auf die Kontaktvorrichtung ausüben kann, um so mindestens einen Teil des Kontaktstreifens radial in elektrisch gute Berührung mit dem Außenumfang der Abschirmung zu bringen. Ein Erdleiter ist so angeordnet, dessen erstes Ende mit dem Kontaktstreifen elektrisch verbunden ist und dessen zweites, im Abstand vom ersten befindliches Ende radial nach außen über die Druckvorrichtung vorsteht.

Die US 5,616,036 A bezieht sich auf eine Erdungsklemme zum Sichern einer elektrischen Vorrichtung an einer Steigleitung. Ein federndes C-förmiges inneres Segment wird über ein bewegliches, ebenfalls C-förmiges Betätigungssegment durch Anziehen einer Schraube an das Steigrohr angepresst. Die Erdungsleitung liegt über eine Schraubenmutter außen an dem Betätigungssegment an und kontaktiert das innere Segment elektrisch über die Schraubverbindung und die Auflagefläche des Betätigungssegments.

Die US 5,850,056 A wird als nächstliegender Stand der Technik der Ansprüche 1 und 11 angesehen. Sie bezieht sich auf ein Übertragungsleitungskabel und bezieht sich insbesondere auf eine elektrische Erdungsausrüstung, die das Übertragungsleitungskabel erdet. Eine Ausrüstung zum Erden eines Leiters eines Übertragungsleitungskabels schließt eine Schelle, einen Bügel und ein Gehäuse ein. Ein Bereich der äußeren Umhüllung des Kabels ist entfernt und offenbart einen freigelegten Abschnitt des Leiters. Die Schelle hat einen Drehpunktbereich und ist mit dem Erdleiter gekoppelt. Die Schelle hat eine C-Form und umgibt einen Teil des freigelegten Abschnittes des Leiters. Der Bügel schließt ein Montageelement ein, das schwenkbar auf dem Drehpunktbereich der Schelle montiert ist, um eine Drehung des Bügels zwischen einer offenen Position und einer geschlossenen Position zu gestatten. In der geschlossenen Position kontaktiert der Bügel die Schelle, die Schelle in einen dichten Eingriff mit dem freigelegten Abschnitt des Leiters zu drücken.

Das hohle Gehäuse ist zylindrisch und schließt eine Öffnung an beiden Enden und eine Austrittsöffnung ein. Das Gehäuse weist entlang seiner Länge eine axiale Naht auf, die es ermöglicht, zeitweilig geöffnet zu werden, um das Gehäuse über die Schelle, den Bügel und das Kabel einzusetzen. Sind einmal diese Komponenten eingesetzt, hält das Gehäuse die Schelle, den Bügel und den freigelegten Leiter in einer abgedichteten Umgebung. Das

Übertragungsleitungskabel verlässt auf jeder Seite des freigelegten Abschnittes das hohle Gehäuse durch die Öffnungen. Der Erdleiter, der mit der Schelle befestigt ist, tritt aus dem Gehäuse über die Austrittsöffnung aus. Der Bügel wird in seine geschlossene Position mit einer minimalen Anstrengung durch den Installateur gedreht, wodurch die Schelle in einen engen Eingriff mit dem äußeren Leiter gedrückt wird. Der enge Eingriff zwischen der Schelle und dem Leiter des Kabels sichert einen elektrischen Kontakt unter einem hohen Druck ab, der erforderlich ist, wenn ein Hochstromzustand in dem Kabel durch einen Blitzeinschlag auftritt. Um die Korrosion zu unterbinden, schafft das Gehäuse ein abgedichtetes Milieu für die Schelle-Bügel-Anordnung, die mit dem Leiter befestigt ist. Mit der Ausnahme des Abstreifwerkzeuges, das verwendet wird, um den Leiter freizulegen, kann die gesamte Erdungsausrüstung auf dem Kabel ohne die Unterstützung irgendwelcher Werkzeuge installiert werden.

Die EP 0 118 627 A1 bezieht sich auf eine elektrisch leitende Verbindung zwischen wenigstens zwei Kabelenden, wobei sich an jedem Kabelende jeweils ein elektrischer Leiter befindet, der zu einer geschlossenen Schlaufe verlängert ist, die am Kabelende um die geerdete Metallhülle des Kabels gebogen ist und von zwei halbbogenförmigen Klemmbacken gegen die Kabelhülle gepresst wird, wobei die Klemmbacken an ihrem einen Ende gegeneinander schwenkbar sind und an ihrem anderen Ende mit Hilfe einer federbelasteten Zugschraube gegeneinander gezogen sind, wobei die elektrischen Leiter miteinander verbunden sind.

Die WO 99/29012 A2 bezieht sich auf einen isolierten elektrischen Leiter für Hochspannungswicklungen. Der elektrische Leiter weist einen leitfähigen Kern und eine äußere halbleitende Schicht auf. Mindestens ein elektrisch leitfähiges Kontaktelement durchdringt mithilfe einer Vielzahl von Dornen die äußere Schicht um sie zu erden. Ein einzelnes Kontaktelement kann eine Vielzahl von Wicklungen des gewickelten Leiters kontaktieren. Weiterhin wird eine Feder verwendet, um die Kontaktelemente an dem Leiter zu fixieren.

Die DE 1 665 548 A offenbart eine Klemmverbindung für den elektrischen Anschluss eines Kabelschirms. Dabei wird ein Metallstreifen um den elektrisch isolierenden Innenmantel eines Nachrichtenkabels so gewickelt, dass scharfkantige Noppen nach außen gerichtet sind. Dadurch wird von diesem Kontaktelement ein metallener Schirm kontaktiert, der auf der Innenseite des Außenmantels angeordnet ist, wenn dieser Außenmantel über den montierten Kontaktstreifen geschoben wird. Die gesamte Anordnung wird durch eine den Außenmantel an der Stelle des Metallstreifens umgreifende verschraubte Spannschelle fixiert.

Die US 4,080,024 A bezieht sich auf einen elektrischen Verbinder für die offen gelegten konzentrischen Neutralleiter eines unterirdischen Kabels. Ein weiches L-förmiges Kontaktelement wird um das Kabel gewickelt und durch eine elastisch gepolsterte Rohrschelle an das Kabel angepresst.

Für die Kontaktierung des Mantelmaterials werden heutzutage üblicherweise zwei Techniken angewendet, nämlich der sogenannte Rheydterschnitt im Falle von Aluminiumummantelungen und das Anbringen einer einfachen Rollfedererdung im Falle von Bleimänteln. Alternativ ist bekannt eine unmittelbare Lötverbindung anzubringen.

Wie beispielsweise aus der Montageanleitung ESD-5920-DE-3/12 für eine Raychem-Übergangsmuffe zur Verbindung von N(A)KBA-Vierleiter oder NAKLEY-Dreileiter-Kabeln mit Vierleiter-Kunststoffkabeln hervorgeht, erfordert insbesondere die Anwendung des Rheydterschnitts großes handwerkliches Geschick und zusätzliches teures Werkzeug. Weiterhin besteht auch stets die Gefahr, dass es zu elektrischen Überschlägen in Folge einer unbeabsichtigten Verletzung der unter dem Aluminiummantel befindlichen Isolationsschichten kommt. Beim Rheydterschnitt wird die Aluminiummantelschicht von der äußeren isolierenden Umhüllung befreit und anschließend wird der Aluminiummantel in einem Winkel von 45° spiralförmig aufgeschnitten. Hierzu ist ein spezielles Schneidgerät erforderlich und es besteht, wie bereits erwähnt, die Gefahr, dass zu tief geschnitten wird.

Der abgerollte Aluminiummantel wird anschließend geglättet und muss mit Hilfe einer Schere in schmalere Streifen geschnitten werden. Diese Aluminiumstreifen werden übereinander gelegt, mit einem Klebeband fixiert und anschließend von einem Schrumpfschlauch abgedeckt und können in dieser Form von außen kontaktiert werden.

Diese bekannte Lösung hat aber weiterhin den Nachteil, dass die Aluminiumstreifen, die der Kontaktierung mit einem Erdungsanschluss dienen, sehr starr sind und sich entsprechend schlecht an gegebenenfalls enge räumliche Beschränkungen anpassen lassen.

Will man dagegen einen Bleimantel erden (N(A)KBA-Kabel), so wird üblicherweise eine Rolle Kupfergewebeband auf den freigelegten Bleimantel aufgewickelt und eine Erdungslitze wird gleichlagig zu dem Erdleiter auf dieses Kupfergewebeband festgelegt. Hierzu werden zwei Lagen einer Rollfeder aufgebracht, die Erdungslitze wird anschließend zurückgefaltet und die Rollfeder vollständig aufgewickelt. Bei dieser bekannten Anordnung wird die Rollfeder mit Isolierband gesichert.

Diese Lösung ist zwar vergleichsweise einfach zu realisieren, hat aber die zusätzlichen Probleme, dass zum einen für das Anbringen der Litze und des Kupfergewebebands zwei separate arbeitsaufwändige Schritte erforderlich sind, und dass zum anderen der Übergangswiderstand zwischen der Erdungslitze und dem Bleimantel über mehrere Materialgrenzen hindurch definiert wird. Im Fall, dass das Kupfergewebeband nicht ausreichend fest anliegt oder die Oberfläche des Bleimantels nicht ausreichend gereinigt wurde, kann dies zu einem erhöhten Übergangswiderstand führen.

Weiterhin ist bei diesen bekannten Lösungen zusammengenommen problematisch, dass zwischen N(A)KBA- und N(A)KLEY-Kablen jeweils unterschieden werden muss und zwei unterschiedliche Erdungssysteme hergestellt und angeboten werden müssen.

Daher besteht die Aufgabe, die der vorliegenden Erfindung zugrunde liegt, darin, eine universell einsetzbare Erdungsvorrichtung für elektrisch leitfähige Kabelmäntel bereitzustellen, die sicher und kostengünstig montierbar ist und eine zuverlässige elektrische Verbindung zwischen einem Erdungspunkt und dem Mantel sicherstellt.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei basiert die vorliegende Erfindung auf der Idee, bei einer solchen Erdungsvorrichtung ein Kontaktelement vorzusehen, das eine Verbindungsleitung zum Anschließen an einen Erdungspunkt aufweist. Erfindungsgemäß ist das Kontaktelement so ausgebildet, dass es im montierten Zustand den Umfang des Kabels wenigstens teilweise umgreift. Weiterhin besitzt die erfindungsgemäße Erdungsvorrichtung ein Halteelement zum Anpressen des Kontaktelements auf den Mantel des Kabels. Dieses Halteelement ist so ausgebildet, dass es im montierten Zustand das Kontaktelement von außen umschließt und einen definierten elektrischen Kontakt zwischen dem Kontaktelement und dem elektrisch leitfähigen Mantel erzeugt. Auf diese Weise wird das Kontaktelement auf den Mantel des Kabels in definierter Weise aufgepresst.

Dadurch, dass das Kontaktelement bereits eine fest angebrachte Verbindungsleitung besitzt, muss im Gegensatz zu der bekannten Kontaktierung von Bleimänteln mit Hilfe der durch Rollfedern befestigten Erdungslitze kein zusätzliches Element bereitgestellt und vor Ort montiert werden.

Die erfindungsgemäße Erdungsvorrichtung kann in vorteilhafter Weise sowohl zur Kontaktierung von Bleimänteln wie auch zum Anschluss an Aluminiummäntel verwendet werden. Für einen Fachmann ist selbstverständlich, dass auch jede andere Art von elektrisch leitfähigen Kabelmänteln mit Hilfe der erfindungsgemäßen Erdungsvorrichtung an einen Erdungspunkt angeschlossen werden können. Es sind keinerlei Modifikationen sowohl an der Erdungsvorrichtung selbst als auch an der Vorgehensweise bei der Montage erforderlich.

Weiterhin muss zum Anbringen der erfindungsgemäßen Erdungsvorrichtung die metallische Ummantelung lediglich von der Außenisolation freigelegt werden, aber es müssen keine aufwändigen Diagonalschnitte, welche die Gefahr bergen, dass die Isolation der darunterliegenden Kabel verletzt wird, durchgeführt werden. Insbesondere, wenn derartige Erdungsvorrichtungen angebracht werden, während das Kabel unter Spannung steht, ist dies von essentieller Bedeutung.

Gemäß einer vorteilhaften Weiterbildung wird das Kontaktelement durch ein im Wesentlichen C-förmig gebogenes Kontaktblech, das vorzugsweise aus verzinntem Kupfer hergestellt ist, gebildet. Diese Materialwahl hat den Vorteil, dass das Blech selbst bereits eine gewisse federende Elastizität und mechanische Stabilität aufweist und während der Montage auf den Mantel so aufgeklippt werden kann, dass es während der weiteren Montageschritte ausreichend fixiert ist. Alternativ kann aber auch jede andere, das Kabel teilweise umschließende Form verwendet werden. Beispielsweise kann das Kontaktelement einen Querschnitt haben, der eine Basis und zwei davon ausgehende Schenkel aufweist. Ein solcher im Wesentlichen U-förmiger Querschnitt hat den Vorteil, dass an den Schenkelinnenseiten auf einfache Weise beliebig geformte Kontaktvorsprünge wie z. B. eine oder mehrere Kontaktschneiden angebracht werden können.

Die Wahl verzinnten Kupfers als Material hat außerdem den Vorteil, dass eine gute elektrische Kontaktgabe sowohl zu einem Aluminium- wie auch zu einem Bleimantel gewährleistet ist.

Gemäß der vorliegenden Erfindung ist die Verbindungsleitung zum Anschließen an einen Erdungspunkt durch eine flexible Metalllitze gebildet. Dadurch ist die erfindungsgemäße Erdungsvorrichtung mechanisch wesentlich flexibler und kann leichter angeschlossen werden, als die bekannte Rheydterschnittanordnung bei Aluminiumkabeln, wie sie bisher verwendet wird.

Die Verbindungsleitung kann beispielsweise mit dem Kontaktelement verlötet werden, was eine besonders feste und elektrisch zuverlässige Art der Kontaktierung darstellt. Selbstverständlich können aber auch alle anderen bekannten elektrischen Kontaktierungsmöglichkeiten, wie beispielsweise Crimpen oder Nieten, eingesetzt werden.

Um den Übergangswiderstand zwischen dem Kontaktelement und dem metallischen Kabelmantel gering zu halten, ist gemäß der vorliegenden Erfindung an dem Kontaktelement mindestens ein in Richtung auf den Mantel des Kabels herausragender Kontaktvorsprung vorgesehen. Dieser Vorsprung durchdringt eventuell vorhandene, den elektrischen Übergangswiderstand erhöhende Oxidschichten und verbindet daher das Kontaktelement besonders sicher sowohl in elektrischer wie auch mechanischer Hinsicht mit dem metallischen Mantel.

Vorzugsweise umfasst das Kontaktelement eine Vielzahl von Stanzpunkten, die als Kontaktvorsprünge an dem Kontaktelement angebracht sind. Solche Stanzpunkte können in besonders einfacher Weise hergestellt werden und bilden zahnartige spitze Vorsprünge, die sich vergleichsweise großflächig an der Oberfläche des Kabelmantels festkrallen können. Alternativ kann auch eine oder mehrere Kontaktschneiden, beispielsweise in Form einer Messerleiste, an der Innenseite des Kontaktelements angebracht werden.

Das Halteelement weist erfindungsgemäß eine Feder auf, die in montiertem Zustand einen federnden Anpressdruck auf das Kontaktelement ausübt. Auf diese Weise wird eine definierte und sichere Fixierung des Kontaktelements auf dem Kabel sichergestellt. Auf besonders einfache Art und Weise kann ein solcher federnder Anpressdruck durch Anbringen einer Rollfeder erreicht werden. Diese ist um den Umfang des Kabels herum gewickelt und umschließt im montierten Zustand das Kontaktelement. Es kann aber auch ein Schellenband mit einem dehnbaren Bereich vorteilhaft verwendet werden, um den federnden Anpressdruck bereitzustellen.

Für eine elektrische Isolierung nach außen wie auch für einen Abschluss gegenüber Feuchtigkeit und korrosiven Medien ist an der erfindungsgemäßen Erdungsvorrichtung weiterhin eine elektrisch isolierende Umhüllung vorgesehen.

Diese Umhüllung kann mindestens eine aus einem Warmschrumpfmaterial gebildete Außenschicht und mindestens eine aus einem elastischen Material gebildete Innenschicht aufweisen. Eine solche doppellagige elektrisch isolierende Umhüllung bietet den Vorteil, dass bei Ausdehnung des Kontaktelements und der Rollfeder durch thermische Beanspruchung eine Rückstellkraft erzeugt wird, die es erlaubt, die Rollfeder wieder in den ursprünglichen Zustand zurückzudrücken, wenn sie sich durch Wärmeeinwirkung ausgedehnt hat. Neben der erwähnten zweilagigen Anordnung können natürlich auch drei- oder mehrlagige Schläuche Verwendung finden. Weiterhin können auch ein- oder mehrlagige Kaltschrumpfschläuche, beispielsweise aus Silikon, als Außenhülle verwendet werden. Die erfindungsgemäße Außenhülle muss im Übrigen nicht notwendigerweise elektrisch isolierend sein, sondern kann auch leitfähig oder halbleitend sein.

Ein Verfahren zum Anbringen einer Erdungsvorrichtung gemäß der vorliegenden Erfindung umfasst zunächst den Schritt des Bereitstellens eines Kontaktelements mit einer Verbindungsleitung zum Anschließen an einen Erdungspunkt. Durch solch eine einteilige Anordnung kann die Montage deutlich beschleunigt werden. In einem nächsten Schritt wird dieses mit der Verbindungsleitung versehene Kontaktelement so an dem Kabel angebracht, dass es den Umfang des Kabels wenigstens teilweise umgreift. Dadurch ist eine vergleichsweise feste mechanische Verbindung bereits ohne zusätzliche Sicherungselemente gewährleistet.

Erfindungsgemäß ist ein Halteelement zum Anpressen des Kontaktelements auf den Mantel des Kabels vorgesehen, wobei das Halteelement so angebracht wird, dass es im montierten Zustand das Kontaktelement von außen umschließt. Dieser von außen auf das Kontaktelement einwirkende mechanische Druck erhöht die Zuverlässigkeit des elektrischen Kontakts und dient außerdem der Erfüllung entsprechender Normvorgaben bezüglich der mechanischen Sicherung einer derartigen Erdungsvorrichtung an einem Kabel.

Wie bereits erwähnt, wird die im Falle einer thermischen Ausdehnung erforderliche Rückstellkraft durch Umhüllen des Kontaktelements und des Halteelements mit einem vorzugsweise elektrisch isolierenden Schrumpfschlauch erzielt, der mindestens eine elastische Schicht aufweist.

Erfindungsgemäß wird das Kontaktelement aus einem Kontaktblech hergestellt, in das eine Vielzahl von Kontaktvorsprüngen eingestanzt wird. Anschließend wird das Blech zum Ausbilden eines im Wesentlichen C-förmigen Querschnitts so gebogen, dass die Kontaktvorsprünge in Richtung auf die Innenseite zu dem Kabelmantel hin orientiert sind. Erfindungsgemäß wird an dem Kontaktblech eine Verbindungsleitung fixiert. Dies kann beispielsweise mittels einer Lötverbindung geschehen, selbstverständlich aber auch mit Hilfe einer Crimpverbindung oder über eine oder mehrere Nieten.

Dadurch, dass das Kontaktelement aus einem Metallblech mit einem im Wesentlichen C-förmigen Querschnitt besteht, besitzt es bis zu einem gewissen Grad Federeigenschaften und kann während der Montage an dem Kabel angeklippt werden. Für eine besonders einfache, aber dennoch sichere Fixierung des Kontaktelements an dem Kabel kann eine Rollfeder vorgesehen werden, die um das Kontaktelement herum gewickelt wird.

Die vorliegende Erfindung wird nachfolgend mit Bezug auf die beigefügten Figuren näher erläutert. Dabei werden gleiche Teile mit gleichen Bezugszeichen und gleichen Bauteilbezeichnungen versehen. Weiterhin können auch einzelne Merkmale oder Merkmalskombinationen aus den gezeigten und beschriebenen Ausführungsformen für sich genommen eigenständige, erfinderische oder erfindungsgemäße Lösungen darstellen. Es zeigen:
- **Fig. 1**: eine perspektivische schematische Darstellung eines Bausatzes zum Herstellen einer Erdungsvorrichtung gemäß der vorliegenden Erfindung;
- **Fig. 2**: ein Detail aus Figur 1;
- **Fig. 3**: einen ersten Arbeitsschritt beim Anbringen der Erdungsvorrichtung gemäß der vorliegenden Erfindung;
- **Fig. 4**: einen zweiten Arbeitsschritt beim Anbringen der Erdungsvorrichtung gemäß der vorliegenden Erfindung;
- **Fig. 5**: einen dritten Arbeitsschritt beim Anbringen der Erdungsvorrichtung gemäß der vorliegenden Erfindung;
- **Fig. 6**: eine vierten Arbeitsschritt beim Anbringen der Erdungsvorrichtung gemäß der vorliegenden Erfindung;
- **Fig. 7**: zwei alternative Darstellungen eines fünften Arbeitsschritts beim Anbringen der Erdungsvorrichtung gemäß der vorliegenden Erfindung;
- **Fig. 8**: ein Detail aus Figur 7;
- **Fig. 9**: eine perspektivische Darstellung eines Kontaktelements gemäß einer weiteren vorteilhaften Ausführungsform;
- **Fig. 10**: ein Detail aus Figur 9.

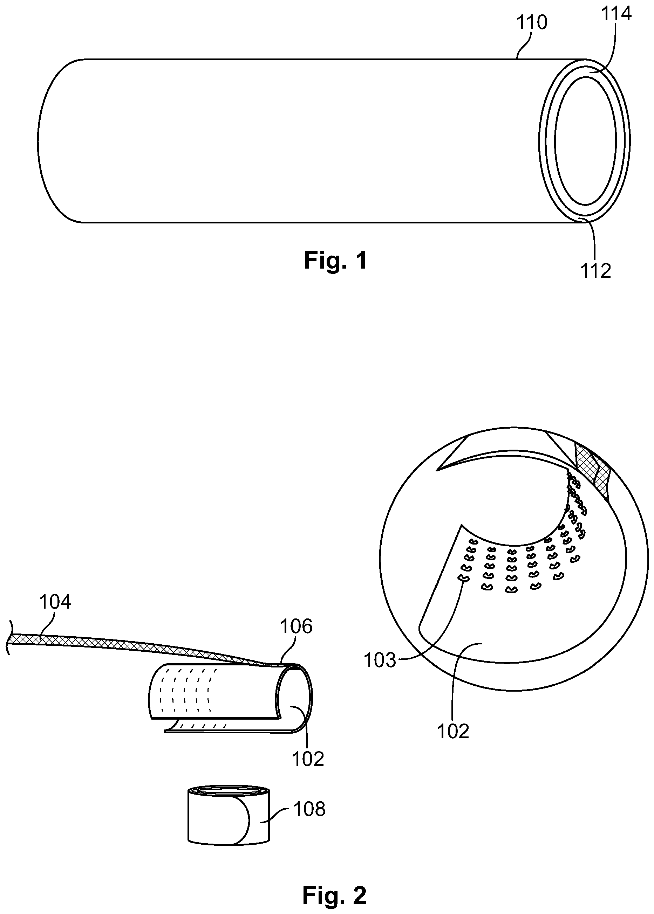

Die für die Erdungsvorrichtung gemäß der vorliegenden Erfindung benötigten Elemente werden zunächst anhand der Figur 1 beschrieben. Wie in Figur 1 gezeigt, umfasst die Erdungsvorrichtung 100 (hier in ihren Einzelteilen gezeigt) ein Kontaktelement 102, das fest mit einer Erdungslitze 104 verbunden ist. Diese Erdungslitze 104 stellt eine Verbindungsleitung dar, die in einem Endbereich mit einem definierten Erdungspunkt verbindbar ist (hier nicht dargestellt). Das Kontaktelement 102 besitzt eine im Wesentlichen C-förmige Querschnittsform, so dass es im montierten Zustand den Umfang eines Kabels (hier nicht dargestellt) umgreifen kann. Die Erdungslitze 104 ist durch eine Lötverbindung 106 fest mit dem Kontaktelement verbunden. Zum Fixieren des aufgeklebten Kontaktelements 102 auf dem Kabel wird erfindungsgemäß eine Rollfeder 108 als Halteelement vorgesehen.

Figur 2 zeigt als Detaildarstellung das Kontaktelement 102 aus Figur 1. Um eine besonders gute elektrische Kontaktierung des leitfähigen Kabelmantels zu erreichen, sind an der Innenfläche des Kontaktelements 102 Kontaktvorsprünge in Form von Stanzpunkten 103 vorgesehen. Diese Stanzpunkte 103 sind von außen nach innen eingestanzt und bildet daher vergleichsweise scharfkantige Zähne aus, die in die äußerste Oberfläche des leitfähigen Kabelmantels eindringen können.

Um im Falle einer Aufweitung durch thermische Beanspruchung die Rollfeder 108 und das Kontaktelement 102 mit der erforderlichen Rückstellkraft wieder in den ursprünglichen Zustand zurückzudrücken, ist erfindungsgemäß eine isolierende Hülle 110 vorgesehen, die gemäß der vorliegenden Erfindung durch einen Warmschrumpfschlauch mit einer elastischen Innenschicht gebildet ist. Wie in Figur 1 dargestellt, ist eine äußere Schicht 112 durch einen Thermoplast gebildet, während eine Innenschicht 114 ein Elastomer umfasst. Die isolierende Umhüllung 110 kann aber selbstverständlich auch noch weitere Schichten umfassen, falls dies erforderlich ist.

Die elastomere Innenschicht 114 ist dabei in der Lage, Verformungen der Rollfeder 108 und des Kontaktelements 102 beispielsweise in Folge von Erwärmung aufzunehmen und bei erneuter Abkühlung die benötigte Rückstellkraft bereitzustellen. Die thermoplastische Warmschrumpfschicht 112 übt demgegenüber dauerhaften Druck von außen nach innen aus.

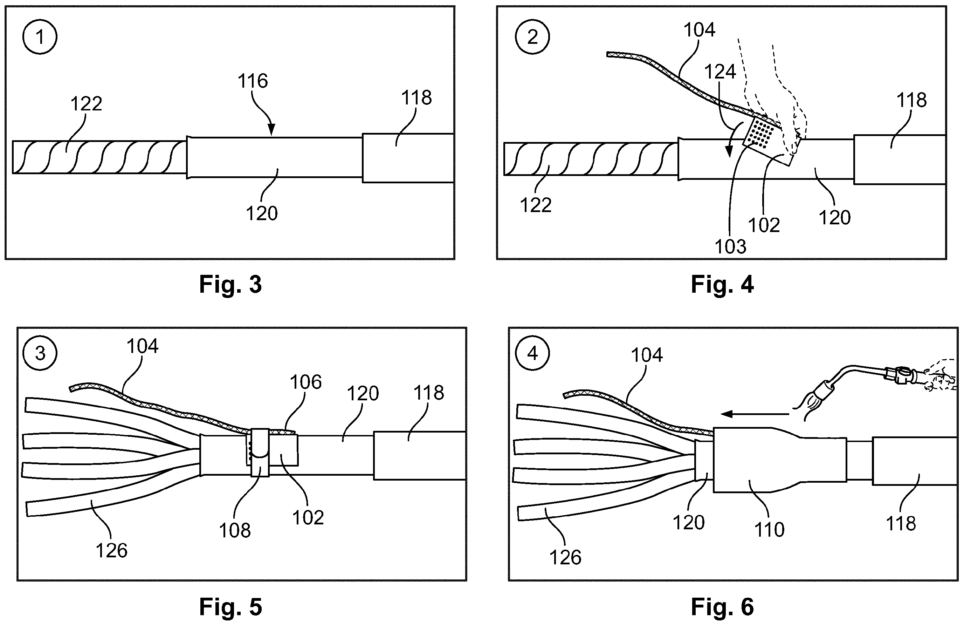

Mit Bezug auf die Figuren 3 bis 8 wird nachfolgend die Montage der erfindungsgemäßen Erdungsvorrichtung 100 auf einem Vierleiter-Kabel 116 im Detail erläutert.

Wie in Figur 3 dargestellt, wird in einem ersten Montageschritt von dem Kabel 116 der isolierende Kabelmantel 118 ausreichend weit entfernt. Dadurch liegt der elektrische leitende Aluminium- oder Bleimantel 120 frei. In einem Endbereich des Kabels wird außerdem auch der metallische Mantel 120 entfernt, so dass die Gürtelisolierung 122 freiliegt.

In dem zweiten Arbeitsschritt (s. Figur 4) wird nun das Kontaktelement 102 auf dem elektrisch leitfähigen Mantel 120 aufgeklippt. Der Pfeil 124 symbolisiert die Montagerichtung des Kontaktelements 102. Gemäß der vorliegenden Erfindung und wie in Figur 2 gezeigt, besitzt das Kontaktelement nach innen auskragende Vorsprünge 103, die durch eine Stanzung hergestellt wurden. Diese Vielzahl von zahnähnlichen, scharfkantigen Vorsprüngen durchdringt eventuell vorhandene Oxid- oder Schmutzschichten und greift in den elektrisch leitfähigen Mantel 120 für eine verbesserte Kontaktgabe ein.

Die durch eine Erdungslitze 104 gebildete Verbindungsleitung ist bereits fest mit dem Kontaktelement 102 (beispielsweise durch eine Lötverbindung) verbunden. Anstelle einer geflochtenen Litze können natürlich auch dickere Drähte verwendet werden. Die Ausführungsform einer Litze hat aber den Vorteil, dass die Verbindungsleitung 104 besonders flexibel und platzsparend ist.

Figur 5 zeigt die erfindungsgemäße Anordnung nach einem weiteren Arbeitsschritt. Wie hier dargestellt, wurden zum einen die einzelnen Kabeladern 126 freigelegt und zum anderen die Rollfeder 108 angebracht. Wie in Figur 5 dargestellt, hat die Rollfeder 108 in dieser Anordnung zwei Funktionen: Zum einen presst sie das Kontaktelement 102 auf den elektrisch leitfähigen Mantel 120, und zum anderen drückt sie die Erdungslitze 104 auf das Kontaktelement 102, um so einerseits eine Zugentlastung für die Lötverbindung 106 zu schaffen und andererseits eine verbesserte elektrische Kontaktierung zwischen diesen beiden Komponenten über eine größere Fläche sicherzustellen.

Die in Figur 5 gezeigte Verbindung wäre für sich genommen bereits funktionsfähig, wenn man davon ausgehen würde, dass keine thermische Belastung auf die Rollfeder 108 wirkt. Sofern aber durch thermische Belastung das Kabel und der Kabelmantel sich so ausdehnen, dass die Rollfeder 108 aufgedrückt wird, besteht die Gefahr, dass die Rollfeder 108 nach dem Abkühlen nicht mehr für eine ausreichende Rückstellkraft sorgen kann. Daher ist als vorteilhafte Weiterbildung des erfindungsgemäßen Halteelements dieses nicht nur durch die Rollfeder 108 gebildet, sondern umfasst weiterhin eine isolierende Hülle 110, die insbesondere in Warmschrumpftechnik über der Rollfeder und dem Kontaktelement 102 montiert wird.

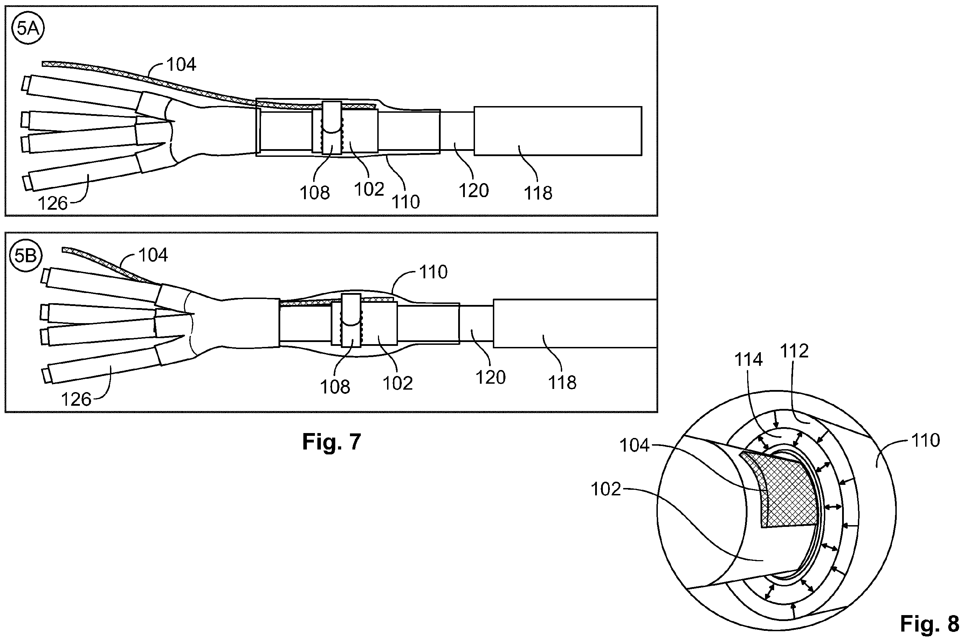

Der Vorgang des Montierens dieser isolierenden Hülle 110 ist in Figur 6 dargestellt. Der endgültig montierte Zustand ist in Figur 7 gezeigt. Hier sind die einzelnen Adern außerdem noch von aufgeschrumpften Isolierschläuchen abgedeckt. Die beiden Varianten "Schritt 5A" und "Schritt 5B" unterscheiden sich dabei, je nachdem ob eine der beiden Adern einen Erdleiter darstellt. Der Fall, dass eine der Adern der Erdleiter ist, ist in Schritt 5B gezeigt. In diesem Fall wird die Erdungslitze mit in den Isolierschlauch für den Erdleiter eingeführt. Andernfalls läuft die Erdungslitze 104 unabhängig von den vier Adern (s. Schritt 5A).

Die Detaildarstellung der Figur 8 verdeutlicht die Funktionsweise der isolierenden Hülle 110. Gemäß dieser Ausführungsform besitzt die isolierende Hülle 110 eine thermoplastische Außenschicht 112, die im endgültig ausgehärteten Zustand starr ist und Druck nach innen ausübt. Eine elastische Innenschicht 114 nimmt den Druck sowohl von außen durch die thermoplastische Außenschicht 112, wie auch von innen durch die Rollfeder 108 und das Kontaktelement 102 auf. So sorgt die isolierende Umhüllung 110 für eine ausreichende Rückstellkraft nach dem Abkühlen, wenn die gesamte Anordnung thermischer Belastung ausgesetzt war.

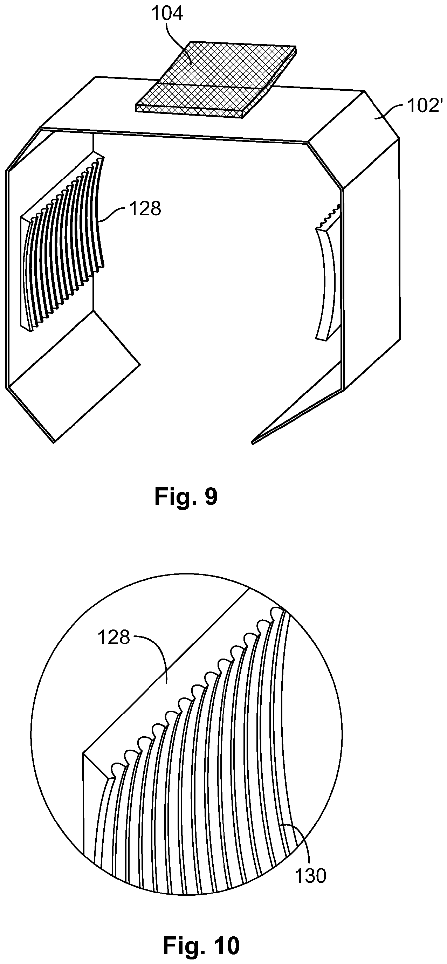

Mit Bezug auf die Figuren 9 und 10 wird nachfolgend eine weitere beispielhafte Ausführungsform des Kontaktelements 102' gemäß der vorliegenden Erfindung erläutert.

Das hier gezeigte Kontaktelement 102' hat im Gegensatz zu dem bisher gezeigten kreisbogenförmigen Querschnitt einen Querschnitt, der eine Basis und zwei davon ausgehende Schenkel aufweist. An der Basis ist die Verbindungsleitung 104, hier beispielhaft eine geflochtene Litze, z. B. mittels einer Lötverbindung fixiert. Selbstverständlich könnte die Verbindungsleitung 104 auch an einem der beiden Schenkelbereiche angebracht sein.

Weiterhin unterscheidet sich die in den Figuren 9 und 10 gezeigte Ausführungsform von den bisherigen dadurch, dass anstelle der gestanzten Kontaktvorsprünge 103 an jedem Schenkelbereich des Kontaktelements 102' eine Messerleiste 128 mit jeweils einer Vielzahl von Kontaktschneiden 130 angebracht ist. Diese Messerleisten 128 können beispielsweise angelötet, aber auch mit allen sonstigen geeigneten Verbindungsverfahren an dem Kontaktblech angebracht werden. Die Kontaktschneiden 130 funktionieren für die elektrische Kontaktgabe zu dem elektrisch leitenden Kabelmantel analog zu den Stanzpunkten, indem sie für einen erhöhten mechanischen Anpressdruck und ein Durchdringen eventueller die Kontaktierung erschwerender Schichten, wie Oxidschichten oder dergleichen, sorgen.

Die Position der Messerleisten 128 kann dabei willkürlich nach den jeweiligen Design- und Produktionserfordernissen gewählt werden. So kann selbstverständlich auch mindestens eine Messerleiste 128 unterhalb der Verbindungsleitung 104 angeordnet sein. Weiterhin können auch nur eine oder mehr als zwei Messerleisten 128 vorgesehen sein.

Wie bereits erwähnt, lässt sich die erfindungsgemäße Erdungsvorrichtung aufgrund ihrer universellen Anwendbarkeit für alle Varianten leitfähiger Kabelmäntel einsetzen, nicht nur für die gezeigten Kabelarten.

**Bezugszeichenliste:**

| **Bezugsziffer** | **Beschreibung** |
|---|---|
| 100 | Erdungsvorrichtung |
| 102, 102' | Kontaktelement |
| 103 | gestanzte Vorsprünge |
| 104 | Erdungslitze |
| 106 | Lötverbindung |
| 108 | Rollfeder |
| 110 | isolierende Hülle |
| 112 | thermoplastische Außenschicht |
| 114 | elastische Innenschicht |
| 116 | Kabel |
| 118 | isolierender Kabelmantel |
| 120 | elektrisch leitfähiger Mantel des Kabels (Aluminium oder Blei) |
| 122 | Gürtelisolierung des Kabels |
| 124 | Montagerichtung des Kontaktelements |
| 126 | Kabeladern |
| 128 | Messerleiste |
| 130 | Kontaktschneide |

## Patentansprüche

1. Erdungsvorrichtung für einen elektrisch leitfähigen Mantel (120) eines Kabels (116), wobei die Erdungsvorrichtung (100) aufweist:
ein Kontaktelement (102, 102') mit einer damit fest verbundenen Verbindungsleitung (104) zum Anschließen an einen Erdungspunkt, wobei das Kontaktelement (102, 102') Federeigenschaften hat und so ausgebildet ist, dass es im montierten Zustand einen Umfang des leitfähigen Mantels (120) des Kabels wenigstens teilweise umgreift,
ein Halteelement (108, 110) zum Anpressen des Kontaktelements (102, 102') auf den elektrisch leitfähigen Mantel (120) des Kabels, wobei das Halteelement (108, 110) so ausgebildet ist, dass es im montierten Zustand das Kontaktelement (102, 102') von außen umschließt und einen definierten elektrischen Kontakt zwischen dem Kontaktelement (102, 102') und dem elektrisch leitfähigen Mantel (120) erzeugt,
wobei das Halteelement ein Federelement (108) aufweist, das im montierten Zustand in Anlage zu dem Kontaktelement (102, 102') ist und dieses umgreift und einen federnden Anpressdruck auf das Kontaktelement (102, 102') ausübt,
**dadurch gekennzeichnet,**
**dass** das Halteelement (108, 110) ferner eine äußere Umhüllung (110) aufweist, die vorzugsweise elektrisch isolierend ist und mindestens eine aus einem Warmschrumpfmaterial gebildete Außenschicht (112) und mindestens eine aus einem elastischen Material gebildete Innenschicht (114) aufweist.

2. Erdungsvorrichtung nach Anspruch 1, wobei das Kontaktelement (102, 102') ein gebogenes Kontaktblech aus verzinntem Kupfer aufweist.

3. Erdungsvorrichtung nach Anspruch 2, wobei das gebogene Kontaktblech (102) einen im wesentlichen C-förmigen Querschnitt hat.

4. Erdungsvorrichtung nach Anspruch 2, wobei das gebogene Kontaktblech (102') einen Querschnitt hat, der eine Basis und zwei davon ausgehende Schenkel aufweist.

5. Erdungsvorrichtung nach einem der vorangehenden Ansprüche, wobei die Verbindungsleitung (104) eine Metalllitze aufweist und/oder wobei die Verbindungsleitung (104) mit dem Kontaktelement (102, 102') verlötet, verschweißt, verschraubt, vernietet oder verpresst ist.

6. Erdungsvorrichtung nach einem der vorangehenden Ansprüche, wobei das Kontaktelement (102) mindestens einen in Richtung auf den elektrisch leitfähigen Mantel des Kabels herausragenden Kontaktvorsprung (103) aufweist.

7. Erdungsvorrichtung nach Anspruch 6, die eine Vielzahl von gestanzten oder V-förmigen Kontaktvorsprüngen (103) oder eine Vielzahl von Kontaktschneiden (130) an der Innenseite des Kontaktelements (102, 102') aufweist.

8. Erdungsvorrichtung nach einem der vorangehenden Ansprüche, wobei das Halteelement ein Schellenband mit einem Dehnungsbereich aufweist, das im montierten Zustand um den Umfang des Kabels herumgewickelt ist und das Kontaktelement (102, 102') umschließt.

9. Erdungsvorrichtung nach einem der vorangehenden Ansprüche, wobei das Halteelement eine Rollfeder (108) aufweist, die im montierten Zustand um den Umfang des Kabels herumgewickelt ist und das Kontaktelement (102, 102') umschließt.

10. Erdungsvorrichtung nach einem der vorangehenden Ansprüche, wobei die Umhüllung (110) einen elastomeren Kaltschrumpfschlauch, vorzugsweise aus Silikon, aufweist.

11. Verfahren zum Anbringen einer Erdungsvorrichtung an einen elektrisch leitfähigen Mantel (120) eines Kabels (116), wobei das Verfahren die folgenden Schritte umfasst:
Bereitstellen eines federnden Kontaktelements (102, 102') mit einer damit fest verbundenen Verbindungsleitung (104) zum Anschließen an einen Erdungspunkt,
Anbringen des Kontaktelements (102, 102') an dem Kabel (116), so dass es einen Umfang des leitfähigen Mantels (120) des Kabels (116) wenigstens teilweise umgreift,
Anbringen eines Halteelements (108, 110) zum Anpressen des Kontaktelements (102, 102') auf den Mantel (120) des Kabels (116), wobei das Halteelement (108, 110) so angebracht wird, dass es im montierten Zustand das Kontaktelement (102, 102') von außen umschließt und einen definierten elektrischen Kontakt zwischen dem Kontaktelement (102, 102') und dem elektrisch leitfähigen Mantel (120) erzeugt, wobei der Schritt des Anbringens eines Halteelements (108, 110) umfasst:
Anbringen eines Federelements (108) derart, das es im montierten Zustand in Anlage zu dem Kontaktelements (102, 102') ist und dieses umgreift und einen federnden Anpressdruck auf das Kontaktelement (102, 102') ausübt,
**dadurch gekennzeichnet,**
**dass** der Schritt des Anbringens eines Halteelements (108, 110) ferner umfasst:
Umhüllen des Kontaktelements (102, 102') und des Federelements (108) mit einem elektrisch isolierenden Schrumpfschlauch (110), der mindestens eine aus einem Warmschrumpfmaterial gebildete Außenschicht (112) und mindestens eine aus einem elastischen Material gebildete Innenschicht (114) aufweist.

12. Verfahren nach Anspruch 11, wobei der Schritt des Bereitstellens eines Kontaktelements mit einer Verbindungsleitung zum Anschließen an einen Erdungspunkt umfasst:
Stanzen und Biegen eines Kontaktblechs zum Ausbilden eines im Wesentlichen C-förmigen Kontaktelements (102, 102'), wobei eine Vielzahl von Stanzpunkten Kontaktvorsprünge (103) an der dem Kabel zugewandten Seite des Kontaktelements (102, 102') formen.

13. Verfahren nach einem der Ansprüchen 11 oder 12, wobei der Schritt des Bereitstellens eines Kontaktelements mit einer Verbindungsleitung zum Anschließen an einen Erdungspunkt umfasst:
Stanzen und Biegen eines Kontaktblechs, wobei das gebogene Kontaktblech einen Querschnitt hat, der eine Basis und zwei davon ausgehende Schenkel aufweist.

14. Verfahren nach einem der Ansprüche 11 bis 13, wobei der Schritt des Bereitstellens eines Kontaktelements mit einer Verbindungsleitung zum Anschließen an einen Erdungspunkt umfasst:
Fixieren der Verbindungsleitung an dem Kontaktblech, wobei sie verlötet, verschweißt, verschraubt, vernietet oder verpresst wird, und/oder
wobei der Schritt des Anbringens des Kontaktelements an dem Kabel umfasst: Anklippen des Kontaktelements.

15. Verfahren nach einem der Ansprüche 11 bis 14, wobei das Anbringen des Halteelements umfasst:
Umwickeln des an dem Kabel montierten Kontaktelements mit einer Rollfeder.

## Claims

1. Grounding device for an electrically conductive sheathing (120) of a cable (116), wherein the grounding device (100) has:
a contact element (102, 102')
having a connection line (104) fastened thereto for connection to a grounding point, wherein the contact element (102, 102') has elastic properties and is configured so that in the mounted state, it at least partially engages around a circumference of the conductive sheathing (120) of the cable,
a retaining element (108, 110) for pressing the contact element (102, 102') onto the electrically conductive sheathing (120) of the cable, wherein the retaining element (108, 110) is configured so that in the mounted state, it surrounds the contact element (102, 102')
on the outside and creates a defined electrical contact between the contact element (102, 102') and the electrically conductive sheathing (120),
wherein the retaining element has a spring element (108), which in the mounted state abuts on and engages around the contact element (102, 102') and exerts an elastic contact pressure on the contact element (102, 102'), **characterised in that**
the retaining element (108, 110) furthermore has an outer casing (110),
which is preferably electrically insulating and has at least one outer layer (112) made of a heat-shrinkable material and at least one inner layer (114) made of an elastic material.

2. The grounding device according to claim 1, wherein the contact element (102, 102') has a bent contact plate made of tin-plated copper.

3. The grounding device according to claim 2, wherein the bent contact plate (102) has an essentially C-shaped cross section.

4. The grounding device according to claim 2, wherein the bent contact plate (102') has a cross section having a base and two legs extending therefrom.

5. The grounding device according to any one of the preceding claims, wherein the connection line (104) has a metal strand and/or wherein the connection line (104) is soldered, welded, screwed, riveted, or press fit to the contact element (102, 102')

6. The grounding device according to any one of the preceding claims, wherein the contact element (102) has at least one contact protrusion (103) projecting towards the electrically conductive sheathing of the cable.

7. The grounding device according to claim 6, which has a plurality of stamped or V-shaped contact protrusions (103) or a plurality of contact edges (130) on the inside of the contact element (102, 102').

8. The grounding device according to any one of the preceding claims, wherein the retaining element has a clamp band with an expansion area, which in the mounted state is wound around the circumference of the cable and surrounds the contact element (102, 102').

9. The grounding device according to any one of the preceding claims, wherein the retaining element has a scroll spring (108), which in the mounted state is wound around the circumference of the cable and surrounds the contact element (102, 102').

10. The grounding device according to any one of the preceding claims, wherein the casing (110) has an elastomeric cold-shrinkable tube, preferably made of silicone.

11. A method for mounting a grounding device on an electrically conductive sheathing (120) of a cable (116), wherein the method comprises the following steps:
Providing an elastic contact element (102, 102') with a connection line (104) fastened thereto for connecting to a grounding point,
Mounting the contact element (102, 102') on the cable (116) so that it at least partially engages around a circumference of the conductive sheathing (120) of the cable (116),
Mounting a retaining element (108,110) for pressing the contact element (102, 102') onto the sheathing (120) of the cable (116), wherein the retaining element (108,110)
is mounted in such a way that, in the mounted state, it surrounds the contact element (102, 102') on the outside and creates a defined electrical contact between the contact element (102, 102') and the electrically conductive sheathing (120), wherein the step of mounting a retaining element (108,110) comprises:
Mounting a spring element (108) in such a way that in the mounted state, it abuts on and engages around the contact element (102, 102') and exerts an elastic contact pressure on the contact element (102, 102'),
**characterised in that**
the step of mounting a retaining element (108, 110) further comprises:
Encasing the contact element (102, 102') and the spring element (108) with an electrically insulating heat-shrinkable tube (110), which has at least one outer layer (112) made of a heat-shrinkable material and at least one inner layer (114) made of an elastic material.

12. The method according to claim 11, wherein the step of providing a contact element with a connection line for connecting to a ground point comprises:
Stamping and bending a contact plate to form an essentially C-shaped contact element (102, 102'), wherein a plurality of stamp points form contact protrusions (103) on the side of the contact element (102, 102') facing the cable.

13. The method according to claim 11 or 12, wherein the step of providing a contact element with a connection line for connecting to a ground point comprises:
Stamping and bending a contact plate, wherein the bent contact plate has a cross section having a base and two legs extending therefrom.

14. The method according to any one of claims 11 through 13, wherein the step of providing a contact element with a connection line for connecting to a ground point comprises:
Fastening the connection line to the contact plate, wherein it is soldered, welded, screwed, riveted or press fit, and/or
wherein the step of mounting the contact element on the cable comprises:
Clipping on the contact element.

15. The method according to any one of claims 11 through 14, wherein the mounting of the retaining element comprises:
Winding a scroll spring around the contact element mounted on the cable.

## Revendications

1. Dispositif de mise à la terre pour une gaine (120) électriquement conductrice d'un câble (116), le dispositif de mise à la terre (100) comprenant :
un élément de contact (102, 102') auquel est relié de manière fixe un conducteur de raccordement (104) destiné au raccordement à un point de mise à la terre, l'élément de contact (102, 102') possédant des propriétés d'élasticité de ressort et étant conçu pour, dans l'état monté, entourer au moins partiellement une périphérie de la gaine (120) électriquement conductrice du câble,
un élément de maintien (108, 110) pour compresser l'élément de contact (102, 102') sur la gaine (120) électriquement conductrice du câble, l'élément de maintien (108, 110) étant configuré de manière telle, que dans l'état monté, il enserre de l'extérieur l'élément de contact (102, 102') et produise un contact électrique défini entre l'élément de contact (102, 102') et la gaine (120) électriquement conductrice,
l'élément de maintien comprenant un élément élastique de ressort (108), qui, dans l'état monté, est en contact avec l'élément de contact (102, 102') et entoure celui-ci en exerçant une pression d'application élastique de ressort sur l'élément de contact (102, 102'),
**caractérisé**
**en ce que** l'élément de maintien (108, 110) comprend, par ailleurs, une enveloppe extérieure (110), qui de préférence est électriquement isolante, et présente au moins une couche extérieure (112) constituée d'un matériau rétractable à chaud, et au moins une couche intérieure (114) constituée d'un matériau élastique.

2. Dispositif de mise à la terre selon la revendication 1, dans lequel l'élément de contact (102, 102') comprend une tôle de contact courbée en cuivre étamé.

3. Dispositif de mise à la terre selon la revendication 2, dans lequel la tôle de contact courbée (102) possède une section transversale sensiblement en forme de C.

4. Dispositif de mise à la terre selon la revendication 2, dans lequel la tôle de contact courbée (102') possède une section transversale présentant une base et deux branches qui en sont issues.

5. Dispositif de mise à la terre selon l'une des revendications précédentes, dans lequel le conducteur de raccordement (104) comprend une tresse métallique, et/ou dans lequel le conducteur de raccordement (104) est assemblé à l'élément de contact (102, 102') par brasage, soudage, vissage, rivetage ou pressage.

6. Dispositif de mise à la terre selon l'une des revendications précédentes, dans lequel l'élément de contact (102) présente au moins une protubérance de contact (103) faisant saillie en direction de la gaine électriquement conductrice du câble.

7. Dispositif de mise à la terre selon la revendication 6, qui présente un grand nombre de protubérances de contact (103) découpées par matriçage ou en forme de V, ou bien un grand nombre de tranchants de contact (130) sur le côté intérieur de l'élément de contact (102, 102').

8. Dispositif de mise à la terre selon l'une des revendications précédentes, dans lequel l'élément de maintien comprend une bande de collier de serrage avec une zone expansible, qui, dans l'état monté, est enroulée autour de la périphérie du câble et enserre l'élément de contact (102, 102').

9. Dispositif de mise à la terre selon l'une des revendications précédentes, dans lequel l'élément de maintien comprend un ressort enroulé (108), qui, dans l'état monté, est enroulé autour de la périphérie du câble et enserre l'élément de contact (102, 102').

10. Dispositif de mise à la terre selon l'une des revendications précédentes, dans lequel l'enveloppe (110) comprend un fourreau élastomère rétractable à froid, de préférence en silicone.

11. Procédé pour mettre en place un dispositif de mise à la terre sur une gaine (120) électriquement conductrice d'un câble (116), le procédé comprenant les étapes suivantes :
la fourniture et la préparation d'un élément de contact (102, 102') à élasticité de ressort auquel est relié de manière fixe un conducteur de raccordement (104) destiné au raccordement à un point de mise à la terre,
la mise en place de l'élément de contact (102, 102') sur le câble (116) de manière à ce qu'il entoure au moins partiellement une périphérie de la gaine (120) électriquement conductrice du câble (116),
la mise en place d'un élément de maintien (108, 110) pour compresser l'élément de contact (102, 102') sur la gaine (120) électriquement conductrice du câble (116),
l'élément de maintien (108, 110) étant mis en place de manière telle, que dans l'état monté, il enserre de l'extérieur l'élément de contact (102, 102') et produise un contact électrique défini entre l'élément de contact (102, 102') et la gaine (120) électriquement conductrice, l'étape de la mise en place d'un élément de maintien (108, 110) comprenant :
la mise en place d'un élément élastique de ressort (108) de manière telle, que dans l'état monté, il soit en contact avec l'élément de contact (102, 102') et entoure celui-ci en exerçant une pression d'application élastique de ressort sur l'élément de contact (102, 102'),
**caractérisé**
**en ce que** l'étape de la mise en place d'un élément de maintien (108, 110) comprend par tailleurs :
l'enveloppement de l'élément de contact (102, 102') et
de l'élément élastique de ressort (108) avec un fourreau rétractable (110) électriquement isolant, qui présente au moins une couche extérieure (112) constituée d'un matériau rétractable à chaud, et au moins une couche intérieure (114) constituée d'un matériau élastique.

12. Procédé selon la revendication 11, d'après lequel l'étape de fourniture et de préparation d'un élément de contact avec un conducteur de raccordement destiné au raccordement à un point de mise à la terre, comprend :
le découpage par matriçage et le cintrage d'une tôle de contact (102, 102') sensiblement en forme de C, un grand nombre de points de découpage par matriçage formant des protubérances de contact (103) sur le côté de l'élément de contact (102, 102') dirigé vers le câble.

13. Procédé selon l'une des revendications 11 ou 12, d'après lequel l'étape de fourniture et de préparation d'un élément de contact avec un conducteur de raccordement destiné au raccordement à un point de mise à la terre, comprend :
le découpage par matriçage et le cintrage d'une tôle de contact, la tôle de contact cintrée possédant une section transversale, qui présente une base et deux branches qui en sont issues.

14. Procédé selon l'une des revendications 11 à 13, d'après lequel l'étape de fourniture et de préparation d'un élément de contact avec un conducteur de raccordement destiné au raccordement à un point de mise à la terre, comprend :
la fixation du conducteur de raccordement à la tôle de contact, la fixation s'effectuant par brasage, soudage, vissage, rivetage ou pressage, et/ou
d'après lequel l'étape de la mise en place de l'élément de contact sur le câble comprend :
l'enclenchement de l'élément de contact.

15. Procédé selon l'une des revendications 11 à 14, d'après lequel la mise en place de l'élément de maintien comprend :
l'enroulement d'un ressort enroulé autour de l'élément de contact monté sur le câble.
